# EUROPEAN PATENT APPLICATION

(11) **EP 1 589 746 A2**
(43) Date of publication of application: **26.10.2005**
(21) Application number: 05251246.4
(22) Date of filing: 02.03.2005
(51) Int. Cl.: H04N 1/60

(54) **System and method for gamut mapping control**

(30) Priority: 02.03.2004 US 791348
(71) Applicant: Monotype Imaging, Inc., Wilmington, MA 01887-1069 (US)
(72) Inventor: De Baer, Dirk C., 2600 Berchem (BE)
(74) Representative: Gallafent, Richard John

(57) **Abstract**

A profile editing system enables modifications to source/destination color data and/or gamut maps. Generally, there are three process flows for color profile editing according to the invention. A first type or type-A process is directed to a method for gamut mapping source color data to destination color data. The method comprises modifying the source color data in a source color space, based upon a color profile edit. This generates modified source color data. Then, the modified source color data is converted to the destination color space to produce the destination color data. Type-B processes are directed to methods for gamut mapping source color data to destination color data and then modifying the destination color data, based upon a color profile edit to generate modified destination color data. Finally, or type-C processes are directed color profile edit that are applied directly to the gamut map that converts the source color data to the target color space to thereby produce the destination color data.

## Description

A portion of the disclosure of this patent document contains material that is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### BACKGROUND OF THE INVENTION

Images are typically recorded and stored as contone images in which each image element has a color tone value. For example, consider a digitally stored color image--each image element will typically have three corresponding values that set tone, among 256 gradations, for example, for primary colors.

For most print or rendering systems, it is necessary to convert the input or source contone image, in some color space, to a colorant space of the target device or destination color space. Many times images are stored such that the pixel level data are in terms of levels of red, green, and blue (RGB). This is most convenient when rendering on common display devices.

Computer display monitors and television displays are made up of red, green, and blue phosphors. They display colors using an additive process. In contrast, standard printing systems are usually based on a four color pallet of cyan, magenta, yellow, and black (CMYK) since many printers produce color by depositing ink on paper. The colors blend on the page. This is known as a subtractive process or mixture.

The conversion is typically performed using a look-up table (LUT) that maps pixel data comprising red, green, and blue levels to pixel data comprising cyan, magenta, yellow, and black levels. Usually, these look-up tables are defined by first printing combinations of cyan, magenta, yellow, and black colorants, measuring the resulting colors, and inverting the resulting color table.

For precise rendering, additional information is required beyond the color levels. Digital color management is used to comprehend the idiosyncrasies of the particular device that is used to render the image. For example, when considering the specific color values associated with a pixel and each of red, green, and blue color levels, the actual displayed color may be different from the precise values, since monitors tend to be different from one another. Consequently, identical RGB numbers can yield different colors on different monitors or other rendering devices such as printers.

In order create a more precise meaning to the RGB values, for example, some give a reference to a particular real or ideal monitor, or a particular real or ideal printer, if the image is represented in CMYK values. This reference is known as the profile and is many times incorporated into the image, with the image data. As a result, the digital RGB image is often made up of the RGB levels, for example, and a profile. The profile gives the numbers meaning based upon the intent of the image creator.

Another set of problems is encountered when moving between different types of devices. A gamut is the range of colors that a particular device can render. These device-specific gamuts are subsets of the chromaticity, which corresponds to the set of colors that are visible to the human eye. As a general rule, the gamut of a printer is normally narrower than a monitor. Here, the device profile is a technique for describing that device's gamut, in terms of an absolute color space. The process of converting from one gamut to another is called gamut mapping.

In the process of authoring content on a computer and rendering that content on some sort of printed matter, it is necessary to comprehend the device profiles of both the monitor and the target printing device. Moreover, there is a necessity to apply color conversion between the profile of the monitor and the destination profile, or the profile of the target printing device. Many times the profile of the monitor is relative to the L*A*B* color space, which maps RGB values to L*A*B* values. Similarly, the printer's device profile is also defined relative to the L*A*B* color space.

The L*A*B* color space is different from RGB and CMYK color spaces. It is used to exaggerate detail without damaging color. The L or lightness channel is defined by a scale extending from 100 (white) to zero (black). The channel contains a gray scale rendition of the image, along with detail information. It does not contain any color information, however. The "a" channel is defined by a scale extending from +128 (red) to -128 (green), and the "b" channel extends from +128 (yellow) to -128 (blue).

One of the challenges of the conversion between the color space of the source device and the target device is comprehending the situation where the target device cannot render a color from the source device. Some of the colors that can be viewed on the monitor cannot be necessarily printed on the particular printer. This conversion requires choosing a reasonable approximation of the original color when a perfect match cannot be found in the target device's gamut. Rendering intents are used as an aid in making these decisions.

There are three generally accepted rendering intents, colorimetric, perceptual, and saturation. When rendering according to the colorimetric rendering intent, the objective is to reproduce the colors as exactly as possible. Colors in the source device profile are replaced with the nearest reproducible color in the destination gamut. Colors that are out of the destination gamut are usually simply clipped. In contrast, perceptual rendering is most often utilized when the destination gamut is narrower than that of the source, as for example, when the source image from a monitor is destined for a printer, and the image is photographic. In this case, the gamut has to be compressed such that the colors keep their relative chromatic positions. The final rendering intent is saturation rendering. It is typically used in graphics. It preserves the saturation of colors in the transformation from gamut to gamut. The original colors are modified, in order to fill the gamut of the destination device.

Techniques exist for modifying the result of gamut mapping. One example is UCR/GCR (under cover removal and grey component replacement). This technique is applied in many graphic arts related products, such as postscript raster-image processors. It addresses the way the amount of black colorant is calculated. By calculating first the equivalent neutral density of the desired color, then reducing the cyan, magenta, and yellow colorants appropriately, and replacing this neutral component by an equivalent amount of black colorant, in principle the same color is obtained but with a lower total amount of colorant, since the black colorant replaces three colorants.

### SUMMARY OF THE INVENTION

Programs are available that can modify gamut mappings. They are sometimes referred to as profile editors. The present invention is directed to methods for editing color profiles. It is directed both to specific processes for implementing this editing and systems and processes for enabling user control of the color profile editing process.

Generally, there are three process flows for color profile editing according to the invention.

In general, according to a first aspect, a first type or type A process is directed to a method for gamut mapping source color data to destination color data. Often, this gamut mapping involves the conversion of the color space from, for example, L*A*B* or RGB to CMYK, for example. The method comprises modifying the source color data in a source color space, based upon a color profile edit. This generates modified source color data. Then, the modified source color data are converted to the destination color space to produce the destination color data.

In general, according to another aspect, the invention features a second type or type B process that is directed to a method for gamut mapping source color data to destination color data. The method comprises converting source color data to a destination image color space to produce the destination color data and then modifying the destination color data, based upon a color profile edit to generate modified destination color data.

Finally, according to another aspect, the invention features a third type or type C process that is directed a method for gamut mapping source color data to destination color data. In this embodiment, the color profile edit is applied directly to the gamut map that converts the source color data to the target color space to thereby produce the destination color data.

In general, according to still another aspect, the invention features a method for enabling user profile control and specifically color profile editing. This invention includes receiving a list of initial profile edits. Further, the user selection of a gamut map for converting the source color data to the destination color data is enabled. If required, the selected gamut mapping is converted to a look up table (LUT) form. Then, according to the invention, the profile edits are applied to the source color data, destination color data and/or the gamut map itself. In this process, the source color data in a source color space are converted to a destination image space to produce the destination color data using the gamut map.

In the preferred embodiment, the source color data profile edits comprise at least one of selective color profile global mapping and gamut mapping profile edits. The destination color data profile edits comprise at least one of single conversion color map curves, shadow contrast, and black replacement profile edits. Finally, the gamut map profile edits comprise look up table changes.

In general, according to still another aspect, the invention features computer software product for profile editing. The product comprises a computer-readable medium in which program instructions are stored, which instructions, when read by a computer, cause the computer to enable user selection of source color data profile edits, destination color data profile edits, and gamut map edits.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:

Fig. 1 is a schematic diagram illustrating the environment in which the inventive profile editor operates in one embodiment;

Fig. 2 is a block diagram illustrating the rendering of the destination color data in a printing device, for example, according to the prior art;

Fig. 3 is a flow diagram showing a process that is performed by the profile editor to provide user control of the profile edits and then the application of the edits to the gamut mapping process, according to the present invention;

Fig. 4A is a block diagram illustrating a type A color profile edit, according to the present invention;

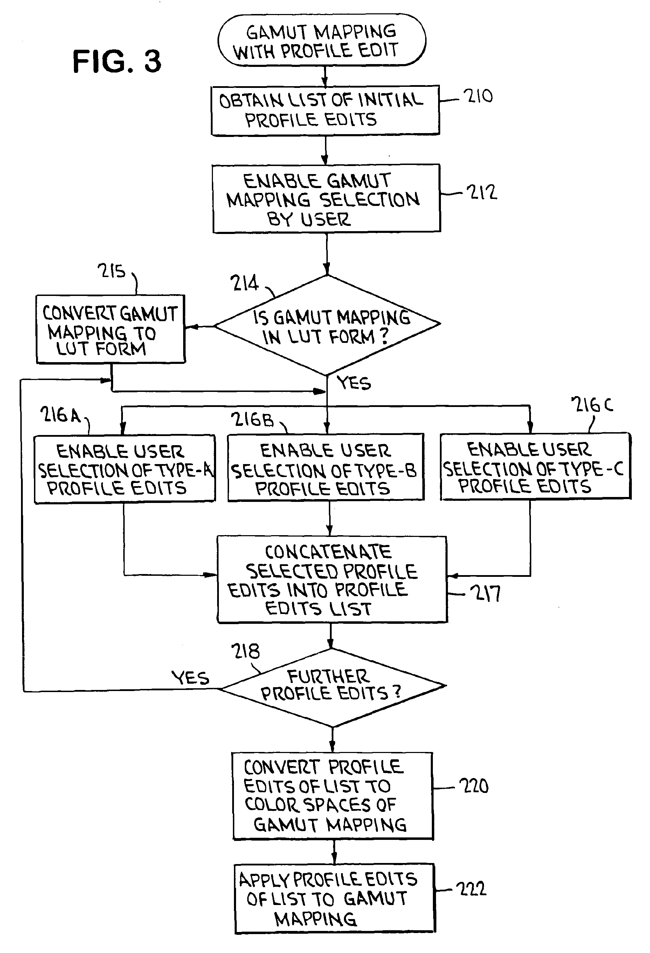

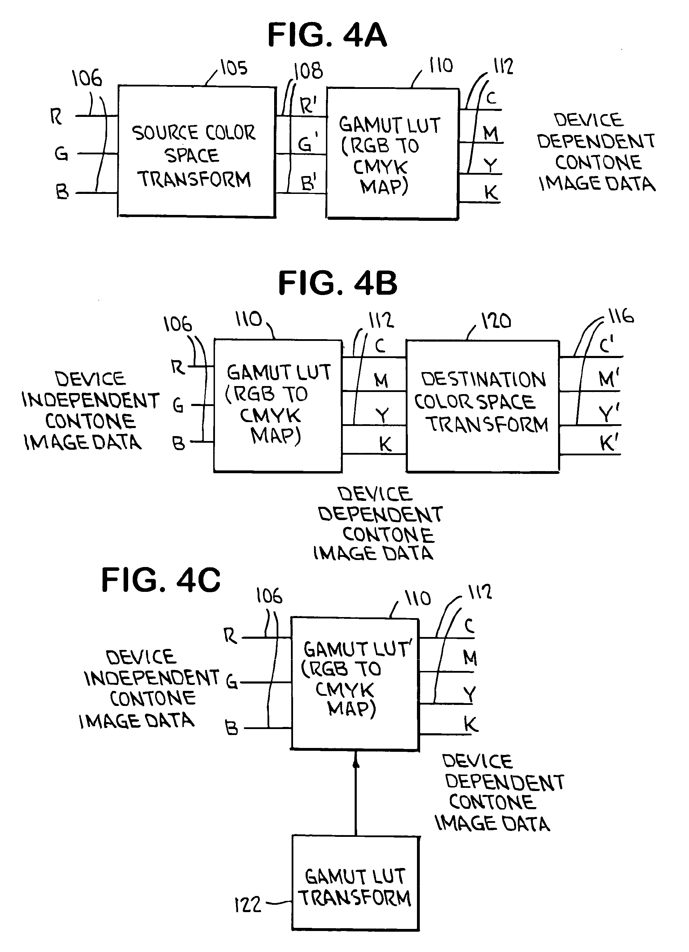

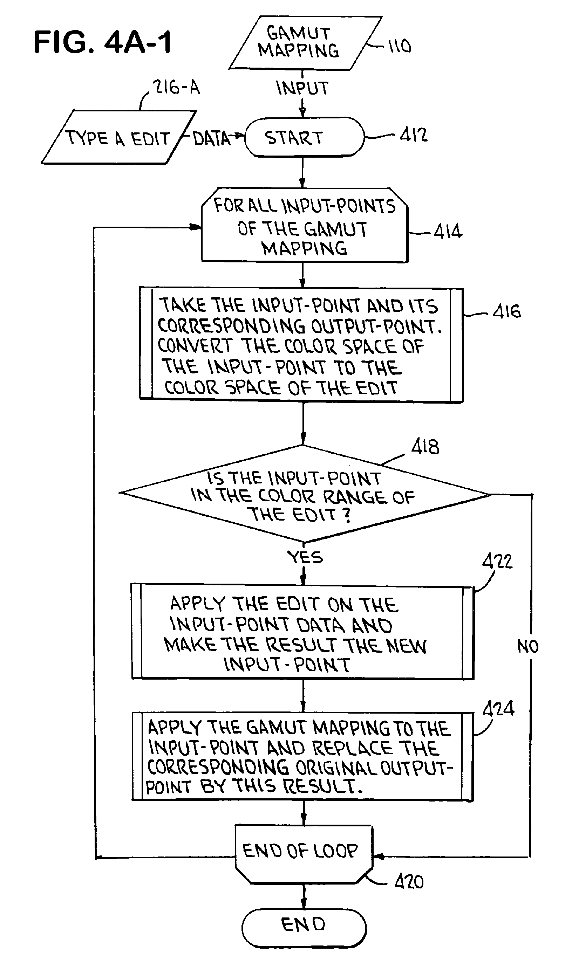

Fig. 4A-1 is a flow diagram illustrating the type-A gamut mapping edits of step 216-A of Fig. 3;

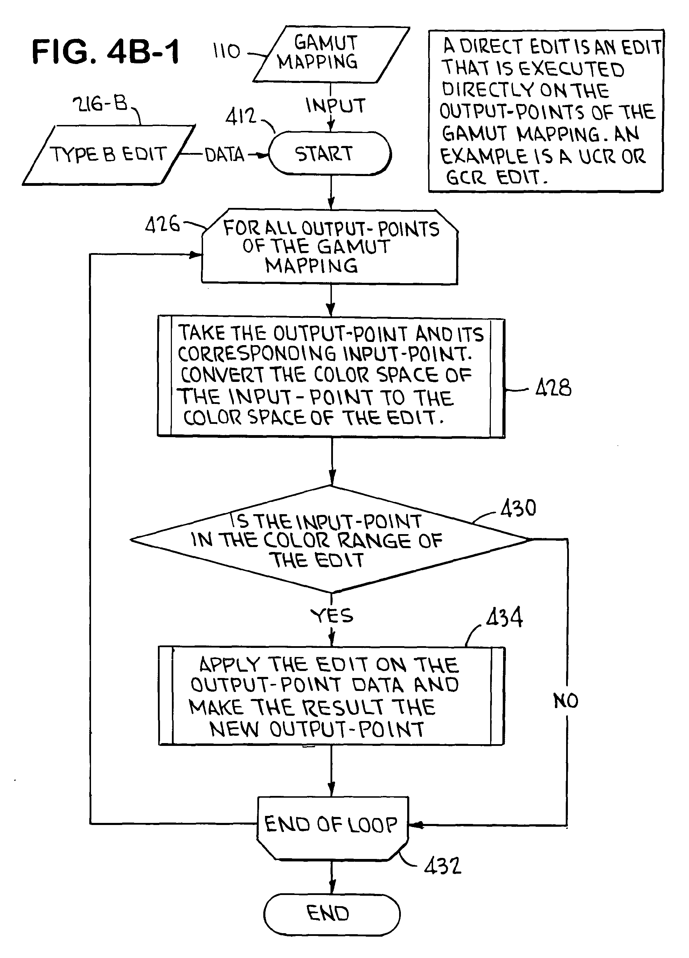

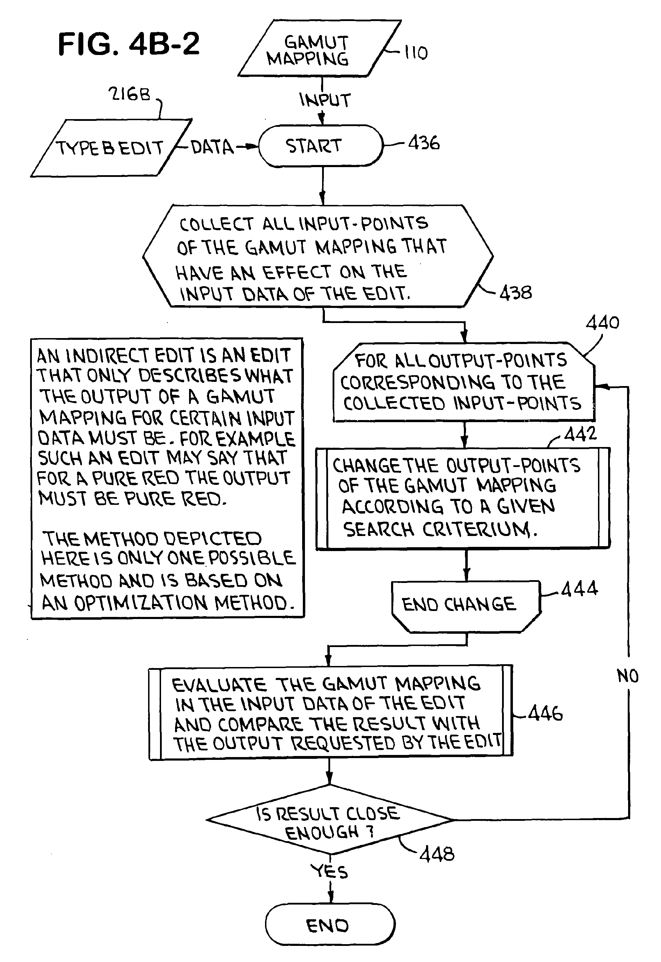

Fig. 4B is a block diagram illustrating a type-B profile edit, according to the present invention;

Fig. 4B-1 is a flow diagram illustrating the process for performing type-B gamut map edits of the step 216-B of Fig. 3;

Fig. 4B-2 is a flow diagram illustrating a variant of the type -B gamut mapping edits or "indirect version" of the step 216-B of Fig. 3;

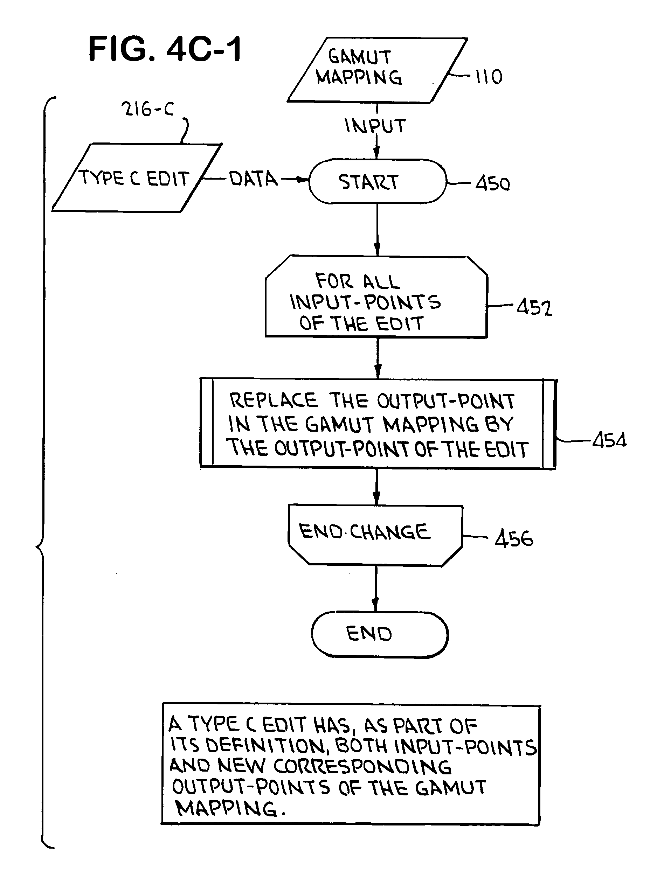

Fig. 4C is a block diagram illustrating a type C profile edit according to the present invention;

Fig. 4C-1 is a flow diagram illustrating the workflow associated with the type-C gamut mapping edits of the step 216-C of Fig. 3.

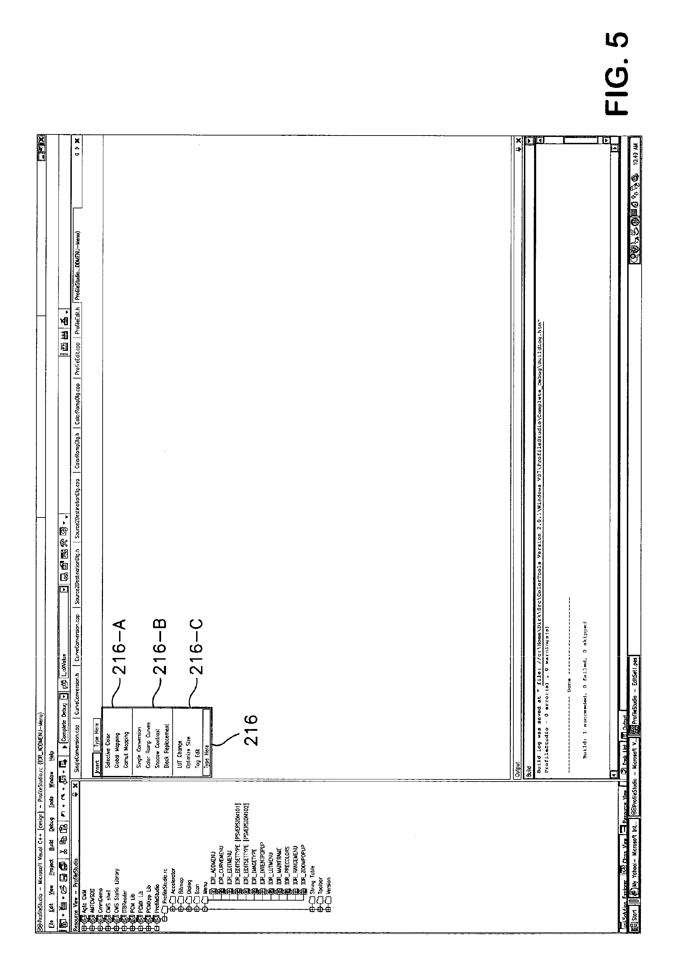

Fig. 5 shows the profile editor user interface that enables user selection between the various types of profile edits, according to the present invention;

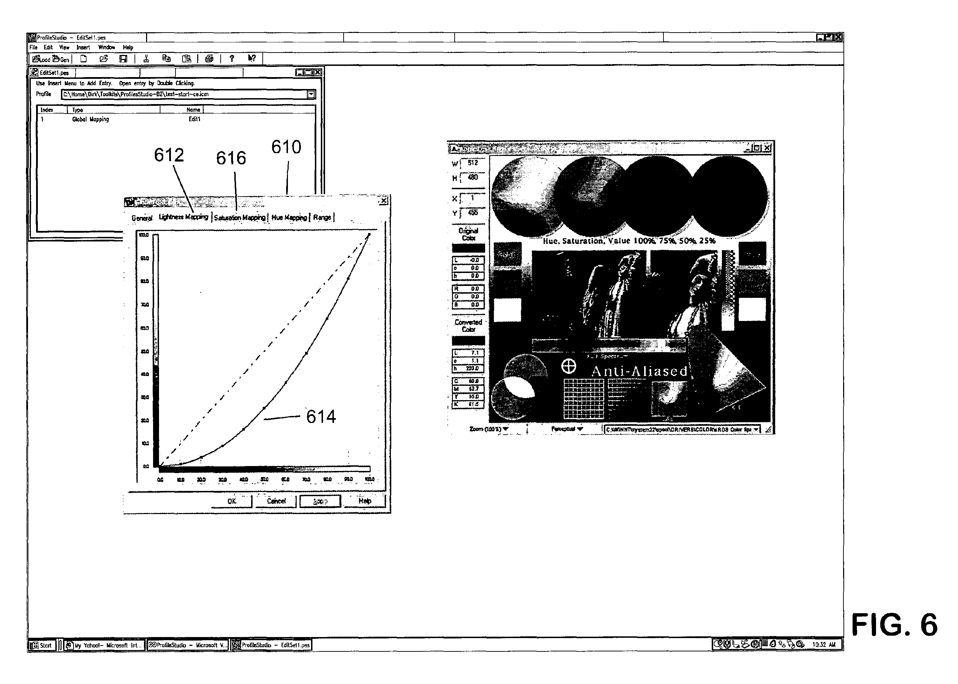

Fig. 6 shows the profile editor user interface that enables global mapping profile edits and specifically lightness mapping, according to the present invention;

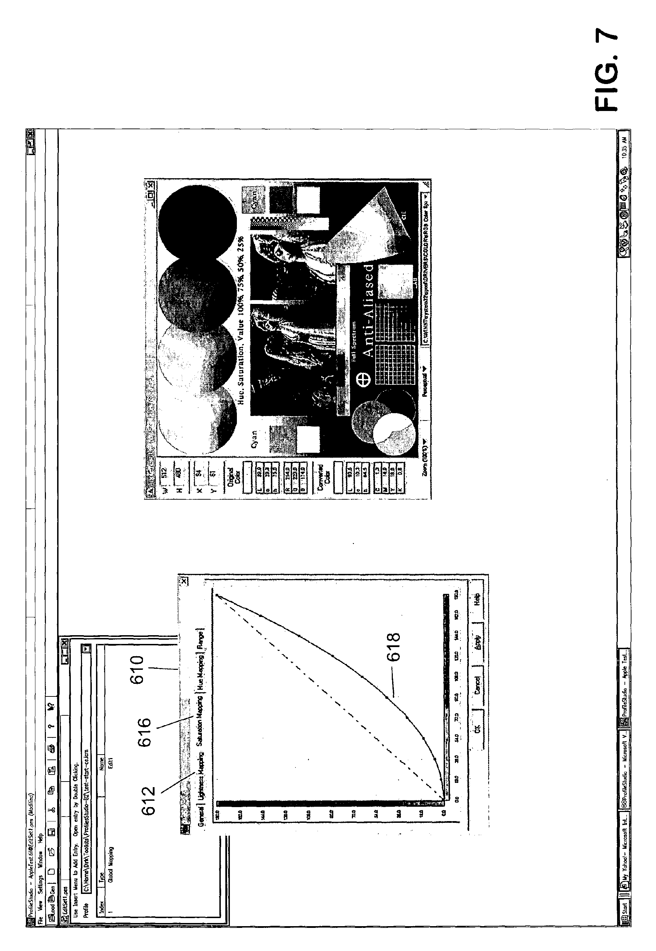

Fig. 7 shows the profile editor user interface that enables global mapping profile edits and specifically changes to saturation mapping, according to the present invention;

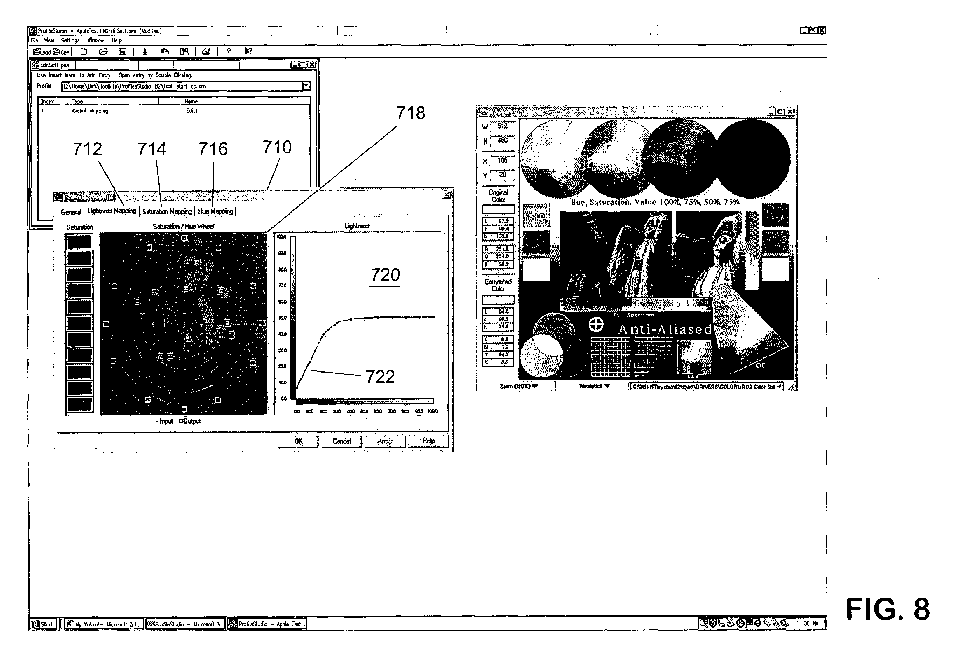

Fig. 8 shows the profile editor user interface that enables changes to gamut mapping profile edits and specifically changes to the lightness mapping, according to the present invention;

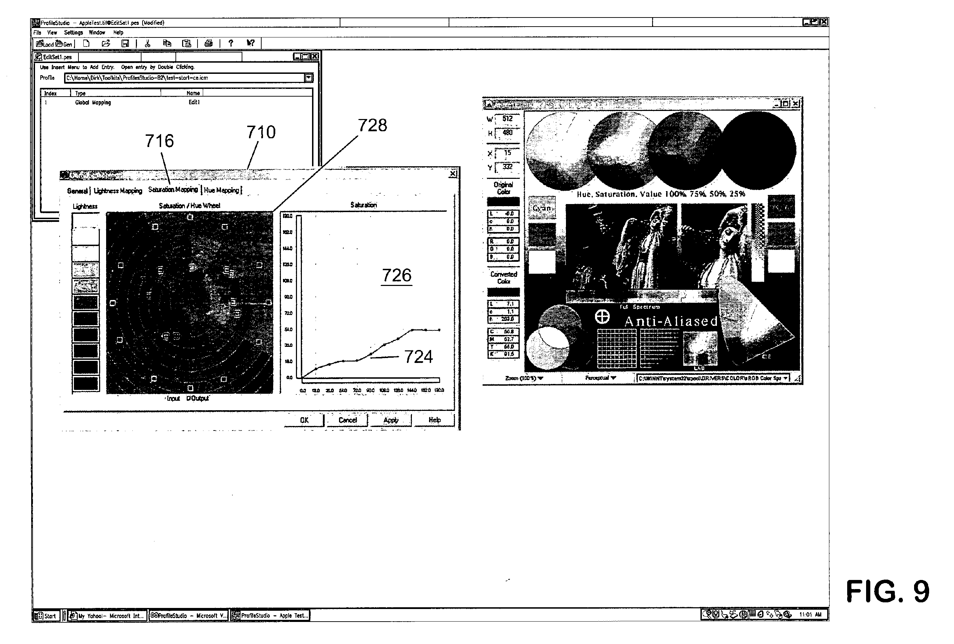

Fig. 9 shows the profile editor user interface that enables gamut mapping profile edits and specifically changes to the saturation mapping, according to the present invention;

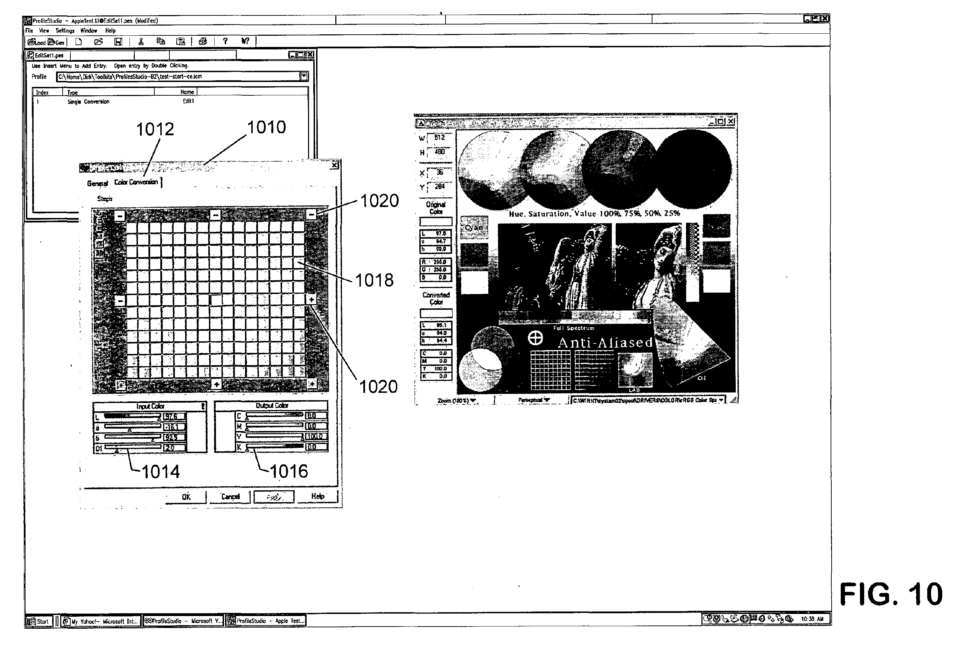

Fig. 10 shows the profile editor user interface that enables single conversion profile editing, according to the present invention;

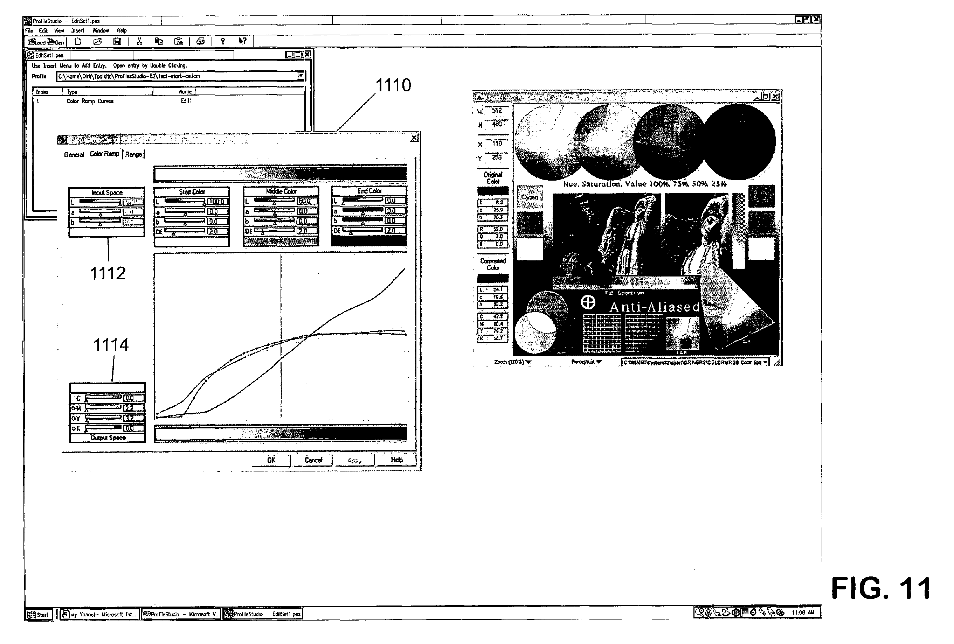

Fig. 11 shows the profile editor interface that enables color ramp curves profile editing and specifically changes to the color ramps, according to the present invention;

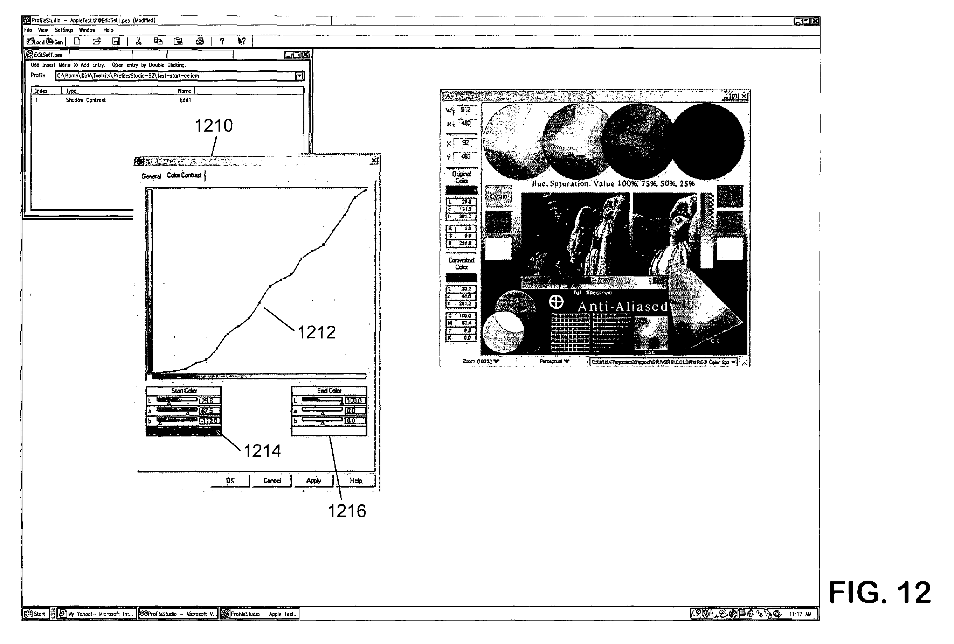

Fig. 12 shows the profile editor user interface that enables shadow contrast profile edits and specifically changes to the color contrast curve, according to the present invention;

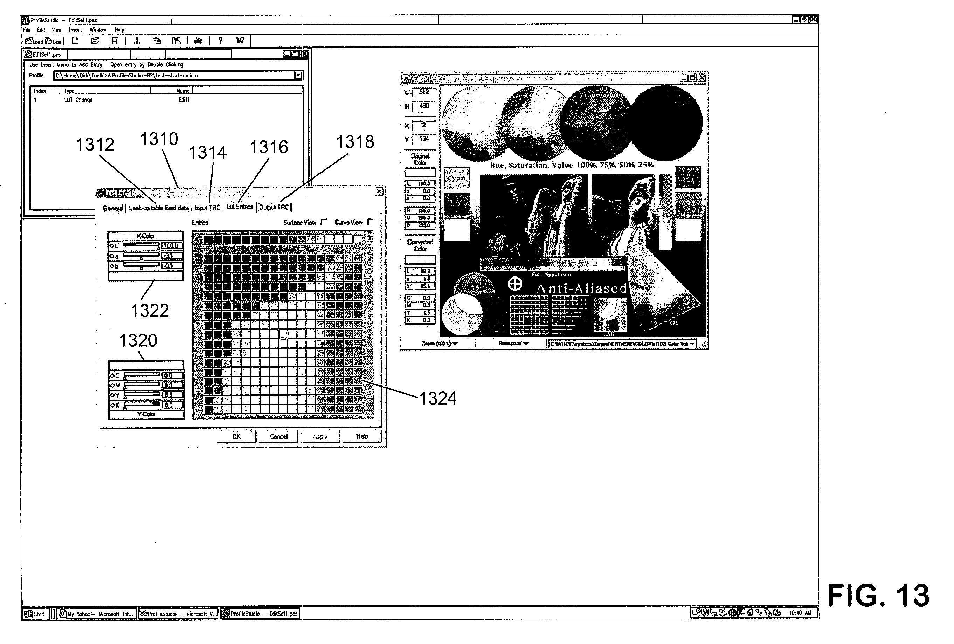

Fig. 13 shows the profile editor user interface that enables gamut map LUT change profile edits and specifically changes to specific LUT entries, according to the present invention;

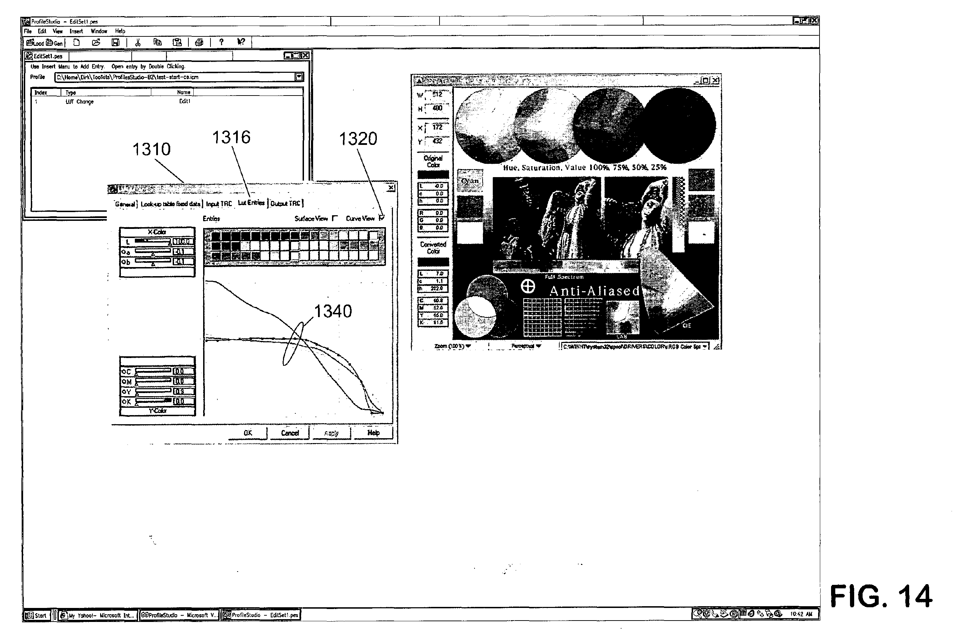

Fig. 14 shows the profile editor user interface that enables LUT change profile edits and specifically changes to the LUT entries, using a curve view, according to the present invention; and

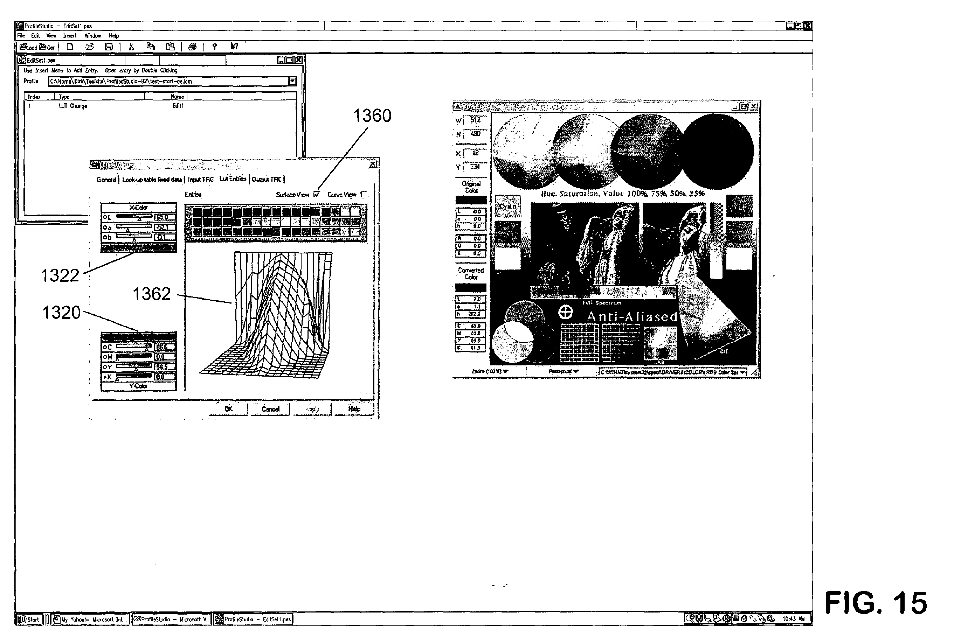

Fig. 15 shows the profile editor user interface that enables LUT change color profile edits and specifically shows changes to the LUT entries using a surface view, according to the present invention.

### DETAILED DESCRIPTION OF THE PREFERRED EMBODIMENTS

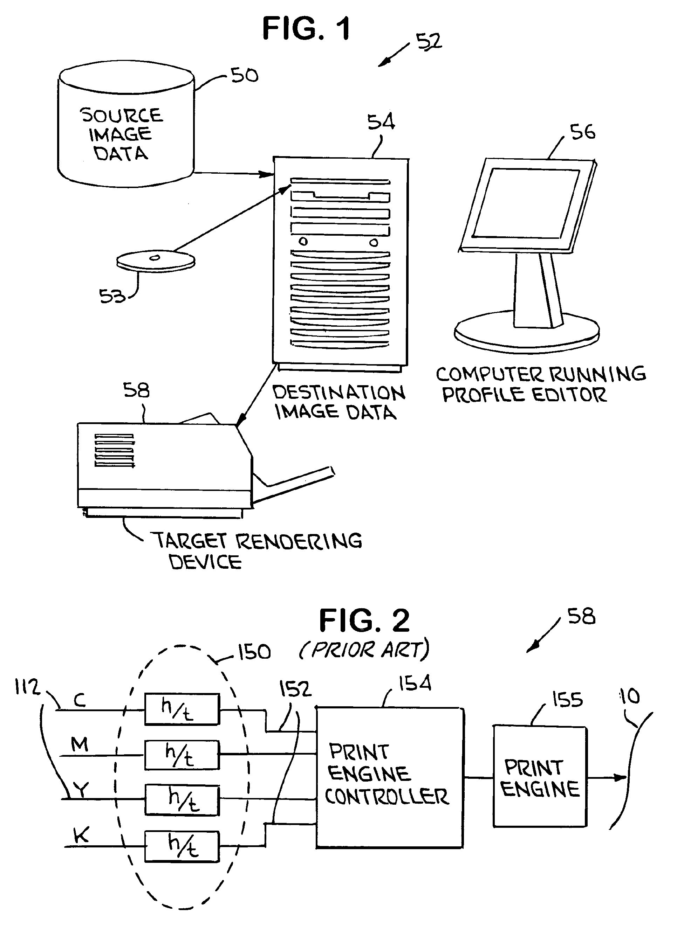

Fig. 1 is a schematic diagram illustrating the typical environment in which the inventive profile editor is used.

Typically, a datastore 50 holds the source color data. Typically, if electronically generated or manipulated source color data are used, they are many times in an RGB or L*A*B* format. These are typically device independent formats. Further, profile information is also commonly included with the source color data that references a monitor or type of monitor thereby providing the absolute color reference, for example.

The profile editor runs on a computer 52, which comprises a central processing unit 54 and a display 56. This profile editor is used to convert the source color data from the datasource 50 to the destination color data in a gamut mapping process. In the typical example, the source color data in the first color space is converted to a color space for a target rendering device 58. This is typically some sort of printer or even another monitor on another computer.

The profile editor, running on the computer 52, provides a mechanism of changing the color profile information, and specifically control the result of the gamut mapping to control how the color data are rendered on the target rendering device 58. Typically, the profile editor is installed on the computer from a disk 53, on which the profile editor machine instructions are stored. These profile edits usually involve changes to the rendering intent, such as saturation, colorimetric, or perceptual rendering intents. They can also adjust the profile to be compatible with the target device, by modifying the profile that is associated with the source data, to be consistent with the target device.

Fig. 2 shows an exemplary target device or rendering system 58.

Contone color data 112 are received by the rendering system. These destination color data are in the color space, CMYK, for example, of the target printing or rendering device. The color channels CMYK 112 are received at halftoning stages 150. These halftoning stages 150 convert the destination image contone color data into target device halftone color data 152.

The halftone color data produced by the halftone stages 150, for each of C, M, Y, K channels are directly processed by the print engine controller 154. Specifically, the print engine controller 154 converts the halftone color data 152 directly into commands to the print engine 155. In one example, the print engine 155 is an ink jet print head that sprays ink droplets onto media 10, such as paper. However, in other embodiments the print engine is laser printer, imagesetter or platesetter.

Fig. 3 shows the steps performed by the profile editor during the process of gamut mapping, and specifically, the process for enabling user modification of the profile to convert the source color data to the destination color data with a profile based usually on the target rendering device 58.

Specifically, in step 210, the program references a list of initial profile edits. These are any changes to either the source color data or the destination color data that had been previously generated, possibly by another program or process.

Then, in step 212, the program enables the user to select a gamut map. Specifically, the user is provided with a selection of various gamut maps that allows the user to convert the source color data to the desired color space of the target rendering device 58. For example, in the example of the inkjet printer, the user would select a gamut map for converting the source color data in a source color space, such as L*A*B* or RGB, to the CMYK color space, as is commonly used in inkjet printers.

Next, in step 214, the program inquires whether or not the gamut map is in a look up table (LUT) form. Sometimes, gamut mapping is provided using algorithmic techniques. In the current embodiment, the program operates on a look up table gamut map, in which combinations of red, green, and blue are mapped to CMYK values, for example, typically by interpolation between cells of the LUT map.

If the gamut map is not in a LUT form, the gamut mapping is converted to an LUT form in step 215.

Then, in steps 216-A, 216-B, 216-C, the profile editor provides the user or enables user selection between type-A profile edits, type-B profile edits, and type-C profile edits.

Generally, type -A profile edits are changes that are made to the source color data as part of the profile editing.

Type -B profile edits are edits to the destination color data. For example, a type B action can be used to address the problem whereby in many CMYK target color spaces, shades of the color yellow have a small percent of cyan. In the halftoning process, this small cyan amount can result in small dots that pepper the otherwise consistent yellow shade. Type B actions can be used to take out this cyan or magenta to avoid this speckling.

Type -C profile edits are changes to the actual gamut map LUT itself.

In step 217, any profile edits selected by the user are concatenated with the current list of profile edits.

In step 218, program flow loops if the user wishes to include additional profile edits to be pushed onto the list of profile edits.

Finally, once the user has selected all of the desired profile edits, the profile edits of the list are converted to the source or destination color spaces of the gamut mapping in step 220. Specifically, if the profile edits are not yet in the color space of either the source color data or the destination color data, the edits are converted. Then, the profile edits of the list are applied to the gamut mapping, and the specifically, the gamut map, the source color data, or the destination color data in step 222.

Fig. 4A shows an exemplary type A conversion. Here, a source color data 106, in an RGB color space, is transformed by the source color space transform 105 of the profile editor to generate modified source color data 108. Then, the gamut map look-up table 110 is applied to convert the modified source color data to the destination color data 112 of the destination image color space CMYK.

Fig. 4A-1 illustrates the workflow or process associated with type-A gamut mapping edits. Specifically, the inputs to this process are the gamut map 110 and the data associated with the selected type-A edit from step 216-A of Fig. 3. Then, in step 412, the type-A edit is initiated. Specifically, in step 414, the processing loads all of the input points of the gamut mapping from the gamut map 110. Then, in step 416, each input point of the source color and its corresponding output point representing the modified source color data are taken and converted to the color space of the input point to the color space of the edit, which here is the color space of the source color data 106. It is determined whether the input point is in the color range of the edit in step 418. If it is not, then the processing proceeds to the end of the loop in step 420. In contrast, however, if the input point is in the color range of the edit, then the edit is applied to the input point data to make the new input point in step 422. The gamut mapping is applied to the input point and it replaces the corresponding original output point with its result creating the modified or destination color data, in step 424. Finally, this process repeats until all of the input points have been processed as determined in step 420.

Fig. 4B shows a type-B profile edit. Specifically, the source color data 106, here in an RGB format, is converted to the CMYK format using the gamut LUT 110. This produces the destination color data 112. In the example, this again is in the CMYK color space. Then, the destination color space transform of this type-B edit 120 is applied. Specifically, the transform 120 converts the destination image data to modified destination color data 116 by applying the transform of the profile edit.

Fig. 4B-1 shows the process flow associated with the type-B gamut mapping edits. This a direct edit process in which the edit is executed directly on the output points of the gamut mapping, such as in UCR or GCR edits. Specifically, the data from the type-B edit determined in step 216-B of Fig. 3 is input along with the gamut mapping 110. The process flow starts in step 412.

Specifically, all output points of the gamut mapping are acquired in step 426, see reference numeral 112. For each output point and its corresponding input point, the conversion is made to the color space of the edit is step 428, converting the source color data to the destination color data. Then, in step 430, it is determined if the input point is in the color range of the edit in step 430. If not, flow proceeds to the end of loop step 432. However, if it is in the range of the edit, then the edit is applied on the output point data or destination image data to make the new output point or modified destination color data 116 in Fig. 4B. The loop repeats until all output points have been processed.

In these examples, the gamut mapping 110 is understood to be represented by an interpolation table. The interpolation table is an N-dimensional array of input points with their corresponding output points. The output of any input point is derived by interpolation between output points of the interpolation table based on the position of the input point relative to the input point of the interpolation table array.

Fig. 4B-2 illustrates an indirect version of the type-B gamut mapping edits. An indirect edit is an edit that only describes wha the output of a gamut mapping for certain input data. For example, the edit may require that, for a pure red input, the output must be pure red.

Specifically, the type-B edit information generated by step 216-B of Fig. 3 is provided as an input, along with the gamut mapping 110 to the start step 436. Next, all input points of the gamut mapping 110 are collected that have an effect on the input data of the edit in step 438. Then, for all output points corresponding to the collected input points that are determined in step 440, the output points of the gamut mapping 410 are changed according to a given search criterion in step 442.

The changes are then terminated in step 444. Then in step 446, the gamut mapping in the input data of the edit is evaluated and compared to the result with the output requested by the edit in step 216-B. The result is then compared to some threshold in step 448. If it is close enough, then the process ends, otherwise the flow repeats.

Fig. 4C illustrates a type-C profile edit. Here, the gamut mapping LUT 110 is changed by applying a gamut LUT transform of the profile edit. This modifies the data in the gamut LUT 110. This LUT enables the direct conversion of the typically device independent source color data 106 to the destination color data 112.

Fig. 4C-1 illustrates the type-C gamut mapping edits. Specifically, the gamut map 110 is provided as an input along with the type-C edit data generated by step 216-C of Fig. 3. The process flow is then started in step 450. Specifically, the input points correspond to reference numeral 106 of Fig. 4C. The output point in the gamut mapping 110 is replaced by the output point of the edit in step 454. Finally, in step 456, the change is ended and the process flow ends.

Fig. 5 shows the user interface for the profile editor, stored on disk 53, for example, and specifically the portion of the user interface that enables user selection between the type-A profile edits, type-B profile edits, and type-C profile edits of steps 216-A, 216-B and 216-C of Fig. 3.

Specifically, a menu 216 is provided. It includes type-A profile edits 216-A, which include selective color, global mapping, and gamut mapping profile edits. Selective color is one of the easiest mapping changes. It affects a specific L*A*B* value, which can be defined as an entirely new CMYK value, for example. Surrounding changes are made by interpolating that into surrounding values. In one example, a Gaussian region of effect is defined. This range of effect can be modified by changing a delta E value, which is the extent of the extreme points of the Gaussian region of affect. Global mapping shows the curves in each of the channels and it also limits the range of the curves in each channel. In gamut mapping, specifically lightness mapping, the A, B of the L*A*B* is divided into U-sectors with various saturation circles. A pie-shaped region can be selected and the lightness transferred to the full range of the available mapping. It controls the fill effect of the device, which may have limited lightness constrairits.

Type B profile edits are provided in sublist 216-B. Here, the profile edits are single conversion, color ramp curves, shadow contrast, and black replacement profile edits. In type B actions, the principle is to change locations in the gamut LUT and then interpolate into surrounding values. For example, it can define a new Y point, and then modify surrounding points. Depending on various embodiments, different change localizations are selected. One caveat, however, is that that device will have a maximum value that cannot be achieved, which controls the degree to which the changes can be propagated into surrounding locations. In one embodiment, an algorithm is used where the user selects the grid points to be changed, and then changes are propagated into surrounding points in order to minimize the difference between the desired curves endpoints.

Single conversion edits change for a single input value the original output value to a new output value. For example, the outcome for pure RGB yellow (255, 255, 0) would be changed to a pure CMYK yellow (0,0,100,0). A Color Ramp Curve edit is similar to a single conversion but for a range of colors defined by a start, middle and end input value. For each color that you get by interpolation between the three input values, a new output value is defined by manipulating the output curves. For example, a change in the outcome for the pure yellow RGB ramp defined by the start colors (0,0,0) to (255,255,0) to (255,255,255) and to make the outcome a pure CMYK yellow is obtained by setting the cyan, magenta and black curves to zero. Shadow contrast (or color contrast) edits involve the redistribution of output colors for the colors defined by a start and end input value based a relative colorimetric distance. Take for example the grey input ramp which is defined between black RGB=(0,0,0) and white RGB=(255,255,255). The output values will be certain CMYK values. The sequence of these CMYK values is called the grey balance for the output system. Each point between black and white will be mapped to a single point in the grey balance. The shadow contrast edit will reassign for each of these points between black and white a new point of the grey balance. Black replacement edit involve the replacement of a percentage of CMY by pure K.

Finally, type C profile edits are provided in sublist 216-C. These include LUT change, optimized size, and tag edit. In LUT change edit, there is a direct manipulation of the elements of an interpolation table. In optimize size edit, there is a removal and/or reduction in the size of parts of an ICC profile. Finally, in Tag edit, there is a direct manipulation of tags (i.e. elements of) an ICC profile.

Fig. 6 shows the user interface associated with the global mapping profile edits. Specifically, selection of the global mapping, type-A profile edit causes the user interface to generate a global mapping window 610. Specifically, if lightness mapping is selected by selecting tab 612, the interface enables changes to the lightness mapping. These are applied to a device independent color space. In more detail, the LUT of the source space of the mapping, for example, in RGB or L*A*B* color space, is operated upon. Specifically, changes to the curve 614 create changes to the mapping.

Fig. 7 illustrates the saturation mapping curve 618, which is provided when the saturation mapping tab 616 is selected. This allows for changes to the saturation mapping by graphical changes to the curve 618, such as by operation of the computer's mouse.

Fig. 8 illustrates the user interface that enables changes to the gamut mapping type A profile edits. Specifically, selection of the gamut mapping generates the gamut mapping window 710. This has tabs for controlling lightness mapping 712, saturation mapping 714, and hue mapping 716.

In the illustrated example, the lightness mapping tab 712 is selected. This generates a saturation hue wheel 718 and a lightness plot 720. Here user-changes to the lightness curve 722 change the lightness mapping of the gamut mapping.

Fig. 9 shows the saturation mapping capability upon selection of the saturation mapping tab 716 in the gamut mapping window 710. A saturation/hue wheel 728 is provided. Further, a saturation map 726 is provided. This has the saturation curve 724 that the user can adjust to thereby change the saturation mapping.

Fig. 10 shows the user interface for the single conversion profile editing. Specifically, selection of the single conversion generates the single conversion window 1010. This has a color conversion tab 1012 that generates a color map that relates the input color in, for example, an L*A*B* value on scale 1014 to an output value, for example, in CMYK color space in scale 1016. This is further graphically shown in the map 1018. On each of the maps inner sections are tabs 1020 that allows the user to scroll to different areas of the map and adjust the conversion between the input color data and the output color data in the gamut map.

Fig. 11 shows the user profile associated with the color ramps of color editing. Specifically, a selection of the color ramps profile editing generates the color ramps window 1110. This relates the input space 1112 to the output space 1114. Specifically, various curves are shown for the start color, middle color, and end color associated with the color ramp on profile editing.

Fig. 12 shows the shadow contrast profile editing. Specifically, selection of the shadow contrast generates the shadow contrast window 1210. This includes a shadow contrast curve 1212 that maps start colors 1214 to end colors 1216 in the shadow contrast.

Fig. 13 shows the color profile changes associated with the LUT changes. Specifically, selection of the LUT change profile changes generates the LUT change window 1310. This provides look up table fixed data tab 1312, input TRC tab 1314, LUT entries tab 1316, and output TRC tab 1318.

Selection of the LUT entries tab 1316 shows the positions in the gamut map mapping L*A*B* input color values to CMYK output values 1320, 1322. The map shows various points in the mapping 1324.

As illustrated in Fig. 14, in the LUT entries tab 1316 of the LUT change window 1310, the curve view can be selected by checking box 1320. This provides the curves 1340 that map the L*A*B* values to the CMYK values. Further, as illustrated in Fig. 15 by selecting the surface view map 1360, the surface of the LUT mapping the L*A*B* values 1322 to the CMYK values of 320 or map 1362 is provided.

In the typical gamut LUT view, various separated entries in the LUT are shown. Intermediate values are achieved by interpolation. By moving from the point by point view to the curved view allows an entire row of the LUT to be changed at once. Finally, by going to the 3D curved view, the entire 2D profile of the LUT can be affected by changes to the three-dimensional profile.

While this invention has been particularly shown and described with references to preferred embodiments thereof, it will be understood by those skilled in the art that various changes in form and details may be made therein without departing from the scope of the invention encompassed by the appended claims.

## Claims

1. A method for colour profile editing, the method comprising:
converting source colour data in a source colour space to a destination image space to produce destination colour data; and
applying colour profile edits by enabling user changes to source colour data to produce modified source colour data and to a gamut mapping for converting the source colour data to the destination colour data.

2. A method according to Claim 1, further comprising receiving a list of initial profile edits.

3. A method according to Claim 1 or 2, further comprising enabling user selection of a gamut map for converting source colour data to destination colour data.

4. A method according to Claim 3 wherein the user selects a destination colour space.

5. A method according to Claim 3, further comprising converting the selected gamut map to a look-up table form.

6. A method according to any one of Claims 1 to 5, further comprising enabling user selection of source colour data profile edits, destination colour data profile edits and gamut map edits.

7. A method according to Claim 6, further comprising applying the profile edits to the source colour data, destination colour data and/or the gamut map.

8. A method according to Claim 6 or 7, further comprising converting the source colour data in a source colour space to a destination image colour space to produce the destination colour data using the gamut map.

9. A method according to any one of Claims 6 to 8 wherein the source colour data profile edits comprise at least one of selective colour profile, global mapping and gamut mapping profile edits.

10. A method according to any one of Claims 6 to 9 wherein the destination colour data profile edits comprise at least one of single conversion, colour ramp curves, shadow contrast and black replacement profile edits.

11. A method according to any one of Claims 6 to 10 wherein the gamut map profile edits comprise look-up table changes.

12. A method for gamut mapping source colour data to destination colour data, the method comprising:
modifying the source colour data in a source colour space to implement a profile edit to generate modified source colour data; and then
converting the modified source colour data to a destination image space to produce the destination colour data.

13. A method according to Claim 12, further comprising receiving a list of initial profile edits.

14. A method according to Claim 12 or 13, further comprising enabling user selection of a gamut map for converting modified source colour data to destination colour data.

15. A method according to Claim 14, further comprising converting the selected gamut map to a look-up table form.

16. A method according to any one of Claims 12 to 15, further comprising enabling user selection of destination colour data profile edits and gamut map edits.

17. A method according to Claim 16, further comprising applying the profile edits additionally to the destination colour data and/or the gamut map.

18. A method according to any one of Claims 12 to 17 wherein the source colour data profile edits comprise at least one of selective colour profile, global mapping and gamut mapping profile edits.

19. A method according to any one of Claims 12 to 18 wherein the source colour data profile edits comprise at least two of selective colour profile, global mapping and gamut mapping profile edits.

20. A method for gamut mapping source colour data to destination colour data, the method comprising:
modifying a gamut map to produce a modified gamut map to implement a profile edit; and
converting the source colour data in a source colour space to a destination image space to produce the destination colour data using the modified gamut map.

21. A method according to Claim 20, further comprising receiving a list of initial profile edits.

22. A method according to Claim 20 or 21, further comprising enabling user selection of the gamut map for converting source colour data to destination colour data.

23. A method according to Claim 22, further comprising converting the selected gamut map to a look-up table form.

24. A method according to any one of Claims 20 to 23, further comprising enabling user selection of source colour data profile edits and destination colour data profile edits.

25. A method according to Claim 24, further comprising applying the profile edits additionally to the source and destination colour data.

26. A computer software product for profile editing, the product comprising a computer-readable medium in which programme instructions are stored, which instructions, when read by a computer, cause the computer to enable user selection of source colour data profile edits, destination colour data profile edits and gamut map edits.

27. A product according to Claim 26 that enables generation of a list of initial profile edits.

28. A product according to Claim 26 or 27 that enables user selection of a gamut map for converting source colour data to destination colour data.

29. A product according to Claim 28 that enables user selection of a destination colour space.

30. A product according to Claim 28 or 29 that enables converting the selected gamut map to a look-up table form.

31. A product according to any one of Claims 26 to 30 that applies the profile edits to the source colour data, destination colour data and/or the gamut map.

32. A product according to any one of Claims 26 to 31 that converts source colour data in a source colour space to a destination image colour space to produce destination colour data using a gamut map.

33. A product according to any one of Claims 26 to 32 that enables selection between the source colour data profile edits, which comprise at least one of selective colour profile, global mapping and gamut mapping profile edits.

34. A product according to any one of Claims 26 to 33 that enables selection between the destination colour data profile edits, which comprise at least one of single conversion, colour ramp curves, shadow contrast and black replacement profile edits.

35. A product according to any one of Claims 26 to 34 that enables selection of the gamut map profile edits, which comprise look-up table changes.
